# EUROPEAN PATENT SPECIFICATION

(11) **EP 1 040 708 B1**
(45) Date of publication and mention of the grant of the patent: **23.03.2005**
(21) Application number: 98962305.3
(22) Date of filing: 28.12.1998
(51) Int. Cl.: H04Q 11/04, H04J 3/16

(54) **INSERTING A PLURALITY OF HIGHER ORDER VIRTUAL CONTAINERS INTO A HIGHER ORDER STMFRAME IN AN SDH SYSTEM**
EINFÜGUNG EINER MEHRZAHL VIRTUELLER CONTAINER HÖHERER ORDNUNG IN EINEN STM RAHMEN HÖHERER ORDNUNG INNERHALB EINES SDH SYSTEMS
INSERTION D'UNE PLURALITE DE CONTENANTS VIRTUELS D'ORDRE SUPERIEUR A L'INTERIEURD'UNE TRAME STM D'ORDRE SUPERIEUR DANS UN SYSTEME SDH

(30) Priority: 29.12.1997 DK 154497
(43) Date of publication of application: 04.10.2000
(73) Proprietor: TELLABS DENMARK A/S, 2750 Ballerup (DK)
(72) Inventor: ELLEGAARD, Lars, DK-2730 Herlev (DK); PEDERSEN, Lars, Anders, DK-2840 Holte (DK); KÜHN, Klaus, 2800 Lyngby (DK)
(74) Representative: Boesen, Johnny Peder
(86) International application number: PCT/DK1998/000582
(87) International publication number: WO 1999/034545

(56) References cited:
- WO-A1-96/33563
- GB-A- 2 287 608
- US-A- 5 490 142
- US-A- 5 682 257

## Description

The invention relates to a method of inserting a plurality of higher order virtual containers into a higher order STM frame in an SDH multiplexing structure. The invention moreover relates to a corresponding multiplexing structure.

The Synchronous Digital Hierarchy (SDH) is a very widely used transmission system for the transmission of a large number of telephone channels between nodes in a transmission network. The system also enables transfer of asynchronous signals, such as e.g. signals from a Plesiochronous Digital Hierarchy (PDH) of 140, 34 and 2 Mbit/s, said signals being inserted or mapped into the SDH system. Standards prescribe how the individual signals are placed in the individual bytes in the pulse frame of the SDH system.

There is a carefully defined structure of how this insertion takes place. The signals are placed in lower order virtual containers together with overhead signals. Together with pointers indicating the start of a virtual container, these lower order virtual containers may be multiplexed together in a higher order virtual container, overhead signals being added again. This higher order virtual container may e.g. be a VC-4, and such a one, together with additional overhead signals, fills an STM-1 frame, which is the basic structure for the transport of SDH signals. In the North American version of the SDH, the STM-1 frame may also be filled by 3 VC-3 instead of a VC-4.

An STM frame is transferred at a data rate of 155.52 Mbit/s. There are also corresponding higher order STM frames (STM-N), and these are transferred at a correspondingly higher data rate. The CCITT recommendations thus define STM-4 and STM-16 which are formed by interleaving 4 and 16 STM-1 frames, respectively, byte by byte. In future, also STM-64 and frames of an even higher order may be contemplated for use. In practice, it is as if N STM-1 frames were transmitted in parallel. When higher order STM frames are used, the situation is typically that many higher order virtual containers, e.g. VC-4, are to be transferred between the same nodes in the network.

Several documents describe the SDH transmission system and other similar transmission systems. GB 2 287 608 relates to the SDH system and discloses an apparatus for monitoring through-paths in the system. US 5 682 257 describes the structure of the corresponding SONET system and the multiplexing of a number of signals together with overhead in the structure. Also WO 96/33563 describes the hierarchy of virtual containers in the SDH/SONET system. A data processing module for mapping data signals into the structure is disclosed.

Since each VC-4, or 3 x VC-3, is transmitted in one STM-1 frame, and since, in practice, an STM-N frame is merely a parallel transmission of a plurality of STM-1 frames, this means that if many frames have the same destination, an excessively large number of auxiliary data in the form of overhead signals, pointer values, etc. have to be transferred. Altogether, the transmission is difficult to manage. This also means that the individual network elements become unduly complex, as these must have processing equipment and pointer buffers, respectively, to handle all these signals.

For example, the network elements, e.g. so-called cross connects (SDXC) which a plurality of STM-1 frames (corresponding to VC-4s) having the same destination pass en route, must include a buffer capacity for handling a pointer for each frame, even though each frame is merely to be passed further on together with the other frames.

Accordingly, an object of the invention is to provide a method of the type stated in the opening paragraph for the insertion of a plurality of higher order virtual containers into a higher order STM frame, wherein considerably fewer auxiliary data have to be transferred, and wherein the processing equipment and pointer buffers of the network elements for the handling of these signals may be reduced when several higher order virtual containers are transferred between the same nodes in the network.

This is achieved according to the invention in that the higher order virtual containers are first multiplexed together in a larger virtual container, and that this is then inserted into the higher order STM frame.

When the higher order virtual containers are assembled in an even larger virtual container, this may be transmitted as an independent unit, and, in the intermediate network elements, it is just necessary to process the overhead signals and pointer values, respectively, associated with this larger container. Only when the virtual containers are split again, is it necessary to process the signals associated with each individual container.

When, as stated in claim 2, four type VC-4 virtual containers are multiplexed together in a larger virtual container (VC-5), and this is then inserted into an STM-4 frame, a method expedient precisely in an SDH system using STM-4 is achieved.

When, as stated in claim 3, a pointer value is added to the larger virtual container (VC-5), and the resulting unit (AU-5, AUG4) is placed in the STM-4 frame, a method is achieved which corresponds to the known structure and is merely performed at a new and higher level in the SDH system.

When, as stated in claim 4, 16 type VC-4 virtual containers are multiplexed in a larger virtual container (VC-6), and this is then inserted into an STM-16 frame, a method expedient precisely in an SDH system using STM-16 is achieved.

When, as stated in claim 5, a pointer value is added to the larger virtual container (VC-6), and the resulting unit (AU-6, AUG16) is placed in the STM-16 frame, a method is achieved which corresponds to the known structure and is merely performed at a new and higher level in the SDH system.

When, as stated in claim 6, a pointer value is added to each of the type VC-4 virtual containers, and the resulting units (TU-4, TUG-4) are multiplexed together in the larger virtual container, a method is achieved which uses the same principles for multiplexing of VC-4 in the larger virtual container as those known from multiplexing of lower order virtual containers.

When, as stated in claim 7, a pointer value is added to each of a plurality of type VC-3 virtual containers, and the resulting units (TU-3, TUG-3) are multiplexed together in the larger virtual container, a method is achieved in which also VC-3 may be multiplexed together in the new virtual container, which may e.g. be expedient in the North American version of the SDH system.

The invention will now be described more fully below with reference to the drawing, in which
fig. 1 shows how an STM-1 frame in an SDH system is constructed,
fig. 2 shows how 3 TUGs are multiplexed into a VC-4,
fig. 3 shows how TU-12s and TUG 2s are multiplexed into a TUG-3,
fig. 4 shows the SDH multiplex structure according to CCITT recommendation G.707,
fig. 5 shows how the multiplex structure of the invention may be extended with a virtual container VC-5,
fig. 6 shows a comparison between a TU-4 pointer and an AU-4 pointer,
fig. 7 shows an example of the structure of an AU-5 pointer,
fig. 8 shows how the multiplex structure of the invention may be extended with a virtual container VC-6, and
fig. 9 shows the combination of VC-5 and VC-6, and how VC-3 may be inserted into VC-5.

A Synchronous Digital Hierarchy (SDH) is a digital transmission system which is used e.g. in connection with the transfer of a large number of telephone channels between nodes in a telecommunications network.

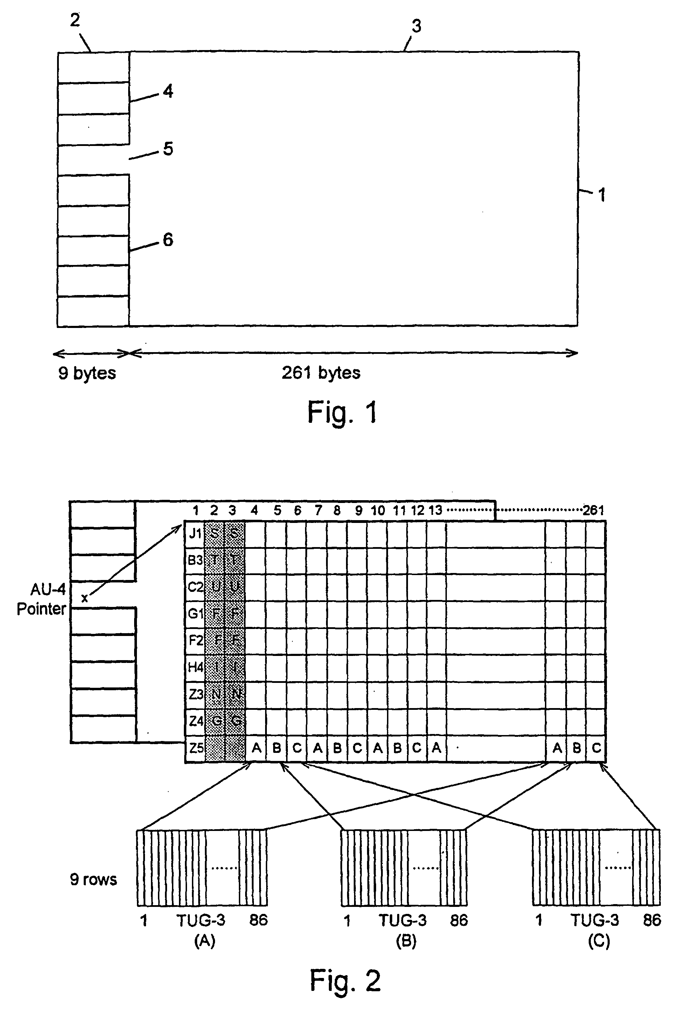

Like many other signals transmitted in telecommunications networks, SDH signals are a serial flow of logic 1s and 0s that may be divided into a sequence of bytes of 8 bits each. The signals are structured such that the transmitted bit flow may be subdivided into a plurality of channels for different applications. The basic structure of an SDH signal is a so-called Synchronous Transport Module at level 1 (STM-1), which is shown in fig. 1, from which it appears that the STM-1 signal may be illustrated as a frame 1 having 9 rows and 270 bytes in each row. The signals are transmitted one row at a time with the uppermost row first, and each row is transmitted from the left to the right. Each byte is transmitted with the most significant bit first.

As appears from the figure, the first 9 bytes 2 in each row are used by the SDH system itself for overhead 4, 6 and pointers 5, respectively. The remaining 261 bytes 3 in each row constitute the transport capacity of the SDH system, with part thereof also being used for overhead. The STM-1 frame is transmitted 8000 times per second, corresponding to a duration of 125 µs of each frame, and since each frame contains 9 rows each having 270 bytes of 8 bits each, the data rate is thus 155.520 Mbit/s. The 125 µs correspond to the sampling time in a digital telephone channel. A telephone channel is digitized with 8 bits, and this means that each byte in an STM-1 signal may be a telephone channel.

The transport capacity of the 9 rows of 261 bytes each constitutes a so-called virtual container, which is called VC-4. Frequently, the SDH system is used for transporting e.g. PDH signals, and in that case a VC-4 may e.g. contain a PDH channel of 140 Mbit/s, or it may be subdivided into a plurality of smaller virtual containers. It may e.g. contain 3 VC-3 each having a PDH channel of 34 Mbit/s or 63 VC-12 each having a PDH channel of 2 Mbit/s. An insertion structure, a so-called mapping, is defined for each of these signal types, said mapping indicating how the signal is to fill the allocated location in the frame.

Fig. 2 thus shows how the 3 VC-3 containers may be mapped into a VC-4. This is done in that VC-4 is subdivided into 3 units called TUG-3, each of which may contain a VC-3. As will be seen, the first three columns are used for overhead and filling bytes, while the three TUG-3 units are multiplexed in the remaining columns.

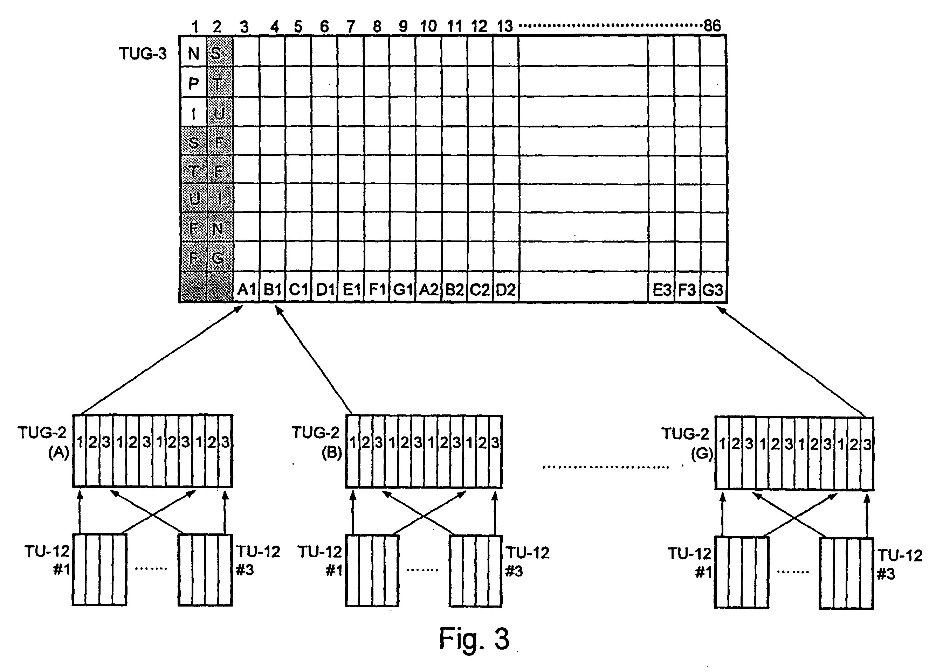

If 2 Mbit/s channels are to be transferred, each TUG-3, instead of a VC-3, contains 7 TUG-2 units, each of which is in turn divided into 3 TU-12 units. It appears from fig. 3 how the TU-12s and the TUG-2s are multiplexed in TUG-3. It also appears that each TU-12 consists of 4 columns each having 9 bytes in each SDH frame, i.e. a total of 36 bytes for each 125 µs.

As mentioned, the STM-1 frame is the basic structure for the transport of SDH signals, and it is moreover used for the creation of corresponding higher order structures by interleaving a plurality of STM-1 frames byte by byte.

CCITT recommendation G.707, in addition to the STM-1 frame, defines the frames STM-4 and STM-16 which are interleaved of 4 and 16 STM-1 frames, respectively, and in future also STM-64, which is interleaved of 64 STM-1 frames, and frames of an even higher order will be a possibility. The data rate of the higher order frames is multiples of the first order data rate, which means that the rate of STM-N is N · 155.52 Mbit/s. The data rate is thus 622.08 Mbit/s for STM-4, 2488.32 Mbit/s (also called 2.5 Gbit/s) for STM-16, and 9953.28 Mbit/s (also called 10 Gbit/s) for STM-64. Since the data rate of an STM-N frame is N times as great as of the STM-1 frame, it is possible to transmit N bytes, viz. a byte from each of the N STM-1 frames of which the STM-N frame is composed, in the time it takes to transmit one byte in the STM-1 frame. In practice, it is therefore as if N STM-1 frames were transmitted in parallel.

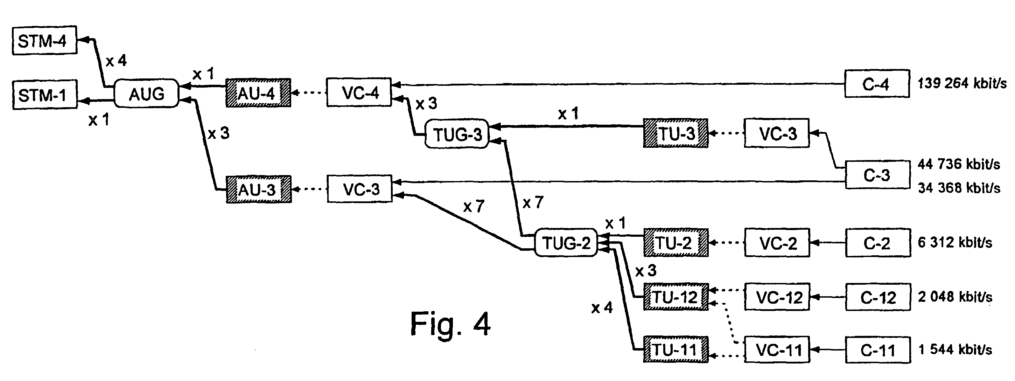

Fig. 4 shows the entire multiplex structure for the insertion of lower order signals in the SDH system. The data rates that may be inserted are shown to the far right in the figure. PDH signals are involved here; but it should be stressed that also other signals, such as e.g. ATM signals, may be inserted. The input signals are placed in so-called containers, C-11, C-12, C-2, C-3 and C-4. The numbers 11, 12, 2, 3 and 4 indicate the level of the container, corresponding to the levels which are known from the PDH system. The lowest level, however, is subdivided into two, as C-11 is used for the North American system (1544 kbit/s) and C-12 for the European system (2048 kbit/s).

The said containers, together with overhead for supervision and maintenance, are placed in lower order virtual containers VC-11, VC-12, VC-2 and VC-3, whose numbers correspond directly to the corresponding containers, by a mapping process.

The virtual containers, together with pointers indicating the start of a virtual container, are then placed in so-called Tributary Units TU-11, TU-12, TU-2 and TU-3. The hatching of the associated boxes in the figure indicates that pointer processing takes place. Again, the numbers correspond directly to the virtual containers.

A group of one or more TU units may then be multiplexed together in a so-called Tributary Unit Group TUG-2 or TUG-3, e.g. as described above with reference to fig. 3. The numbers correspond to the TU units which fill a TUG completely, and in which multiplexing is therefore not needed.

The TUGs are then multiplexed together in a higher order virtual container VC-3 or VC-4, with simultaneous addition of overhead signals. As described above, these virtual containers, however, may also be filled by a corresponding container (C-3 or C-4) . Again, the numbers refer to the containers which may fill a whole virtual container. It should be noted that in the European system there is only one higher order virtual container, VC-4, as VC-3 is a lower order virtual container, as described above. In the North American system, VC-3, on the other hand, is a higher order virtual container like VC-4, and this system thus just operates with the three lower order virtual containers VC-11, VC-12 and VC-2.

In the same manner as for the lower order virtual containers which are placed in TU units, the higher order virtual containers are then placed in so-called Administrative Units AU-3 or AU-4 together with pointers which indicate the start of a virtual container. Here, too, the hatching of the associated boxes indicates that pointer processing takes place. Again, the numbers correspond directly to the virtual containers.

AUG, which is a so-called Administrative Unit Group, defines a group of Administrative Units, which are multiplexed together to form a first order SDH system (STM-1). The European system just includes one AU unit, viz. AU-4, and AUG is therefore identical with it; but in the North American system it is also possible to multiplex three AU-3s together in AUG.

Finally, so-called Section OverHead (cf. 4 and 6 in fig. 1) is added to a plurality of AUGs, thereby providing a Synchronous Transport Module STM-N, which is the signal transmitted on the SDH line. As mentioned above, N indicates the order of the module, and it also corresponds to the number of AUGs which may be transmitted in the module. The figure just shows STM-1 and STM-4 for clarity; but it goes without saying that STM-16 and STM-64 or others may be shown in a quite similar manner.

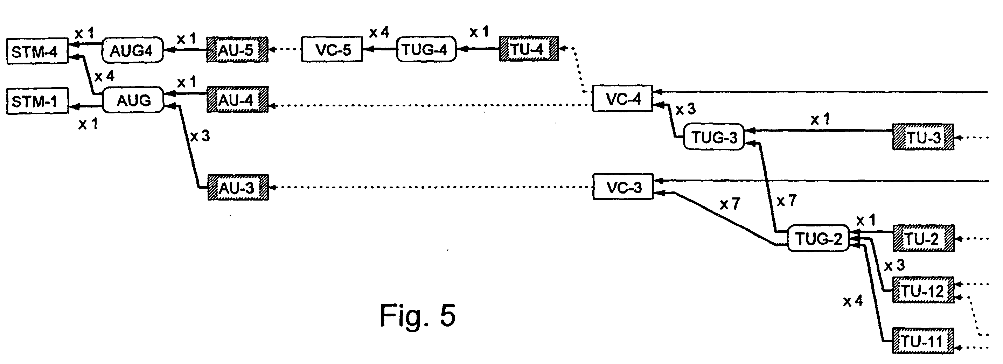

Fig. 5 shows an example of how the structure described above may be extended according to the invention. For clarity, the right part of fig. 4 is omitted here, as it is not addressed by the invention. Instead of placing the VC-4 directly in an AU-4, it may now be placed together with pointers in a new Tributary Unit TU-4 in the same manner as has been described previously for the lower order virtual containers. Like before, the number corresponds directly to the virtual container. TU-4 is then placed in a new Tributary Unit Group TUG-4, and since this is filled completely by a single TU-4, it again has the same number.

Four TUG-4s are then multiplexed together in a new higher order virtual container VC-5, with simultaneous addition of the necessary overhead signals. The designation VC-5 has been selected, because it is the next higher level after VC-4, and it is thus fully consistent with the principles from the part of the structure described above. Then, together with pointers indicating the start of the virtual container, the VC-5 may be placed in a new administrative Unit AU-5, which again has the same number as the virtual container. Finally, there is a new Administrative Unit Group, AUG4, which is identical with the AU-5. The designation AUG4 indicates that it may be fitted directly in an STM-4, with simultaneous addition of Section OverHead (SOH) according to the same principle as in the insertion of AUG into the STM-1 frame.

The structure shown is expedient when several VC-4s are to be transmitted over the same extent in the SDH network. In the network elements passed en route, e.g. so-called cross connects (SDXC), it has previously been necessary to handle each VC-4 (corresponding to each STM-1 frame) separately. This means inter alia that the network element must be provided with a sufficient number of pointer buffers for an AU-4 pointer to be handled for each VC-4. The invention replaces the AU-4 pointer by a TU-4 pointer for each VC-4 and an AU-5 pointer associated with the new virtual container VC-5. In the network elements passed en route, now only one AU-5 pointer is to be handled, instead of four AU-4 pointers, and this gives a considerable saving in the number of necessary pointer buffers. It is not necessary to handle the TU-4 pointer till in the network element in which the VC-4s are split again, and the TU-4 pointer per se may be structured more simply than the AU-4 pointer.

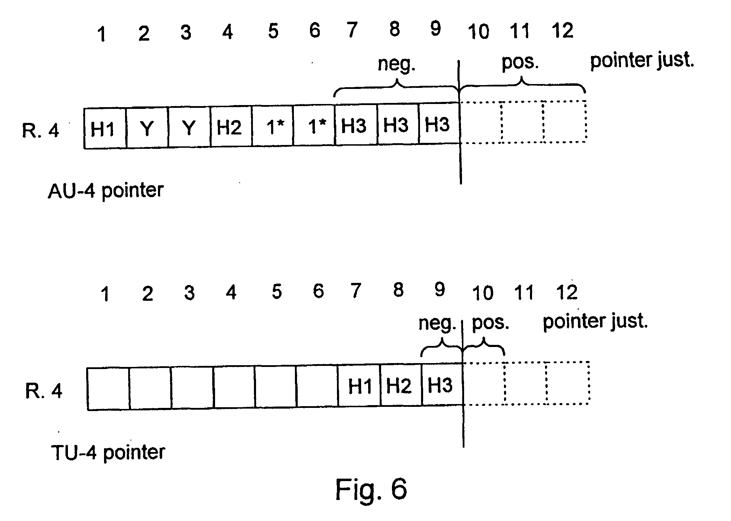

Fig. 6 shows a comparison between the well-known structure of an AU-4 pointer and a proposal for a structure for the new TU-4 pointer. It will be seen that the TU-4 pointer may have a very simple structure. For example, a single byte suffices here for negative pointer adjustment and positive pointer adjustment, respectively, while the AU-4 pointer correspondingly uses three bytes.

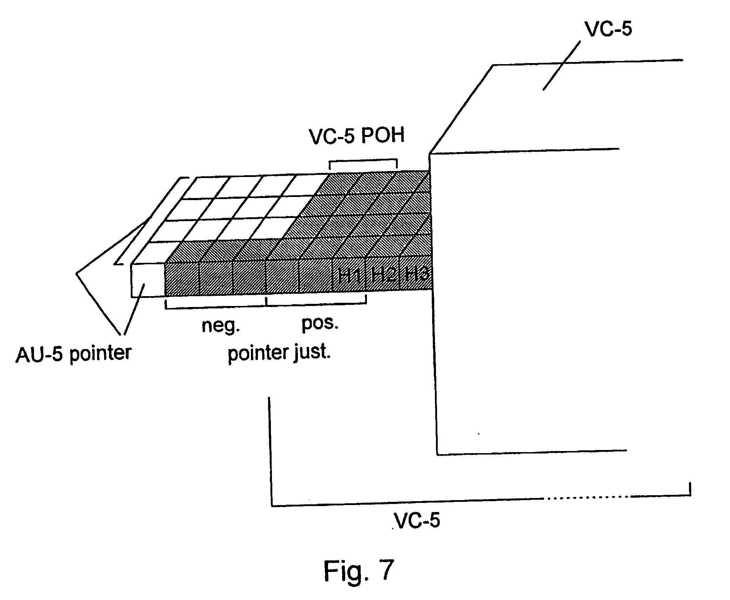

Fig. 7 shows an example of how an AU-5 pointer and the Path OverHead (VC-5 POH) associated with VC-5 may be structured. The AU-5 pointer itself is formed by a byte from each of the four STM-1 frames of which the STM-4 frame is composed, while the other bytes, shown in white in the figure, are not used.

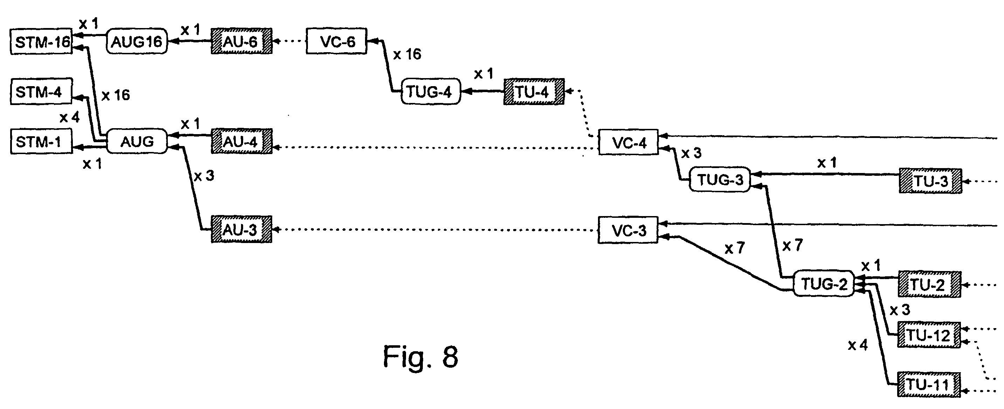

Fig. 8 shows an alternative example of how the SDH structure may be extended according to the invention. This example involves a new virtual container, VC-6, which may be fitted directly in an STM-16 frame. In this case, too, a VC-4 is placed together with pointers in a new Tributary Unit TU-4 in the same manner as has been described previously. Correspondingly, TU-4 is then placed in a new Tributary Unit Group TUG-4, and since this is filled completely by a single TU-4, it again has the same number.

Instead of placing four TUG-4s in a new higher order virtual container VC-5 like in fig. 5, 16 TUG-4s are now multiplexed together in a new higher order virtual container VC-6, with the simultaneous addition of the necessary overhead signals. The designation VC-6 has been selected, because it is the next higher level after VC-5, and it is thus fully consistent with the principles from the part of the structure described above. Together with pointers indicating the start of the virtual container, the VC-6 may then be placed in a new Administrative Unit AU-6, which again has the same number as the virtual container. Finally, there is a new Administrative Unit Group, AUG16, which is identical with the AU-6. The designation AUG16 indicates that it may be fitted directly in an STM-16, with simultaneous addition of Section OverHead (SOH) according to the same principle as in the insertion of AUG into the STM-1 frame.

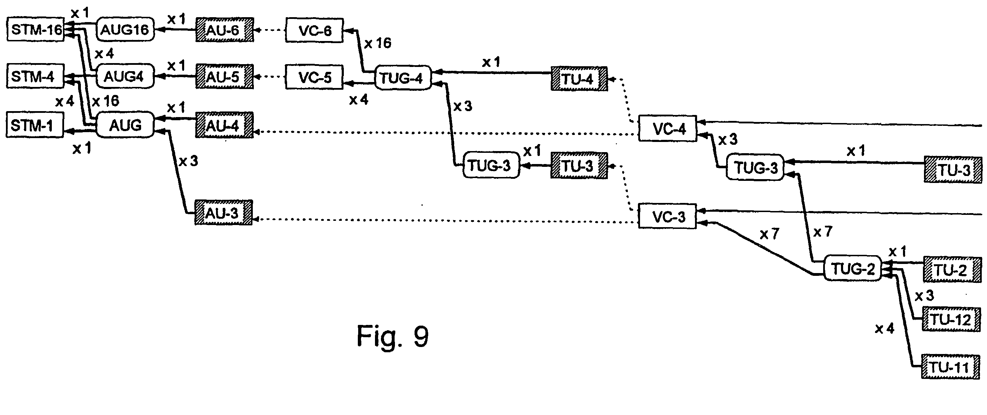

Finally, fig. 9 shows the complete extended structure according to the invention, illustrating both VC-5 and VC-6 and showing how they are inserted into STM-4 and STM-16, respectively. It should be noted here that also four VC-5s (corresponding to the AUG4s) may be interleaved in an STM-16 in the same way as four AUGs may be placed in a well-known manner in an STM-4, i.e. by interleaving byte by byte. The figure also shows how, in the situation where VC-3 is a higher order virtual container, i.e. in the North American SDH system, 12 VC-3s may be inserted into the new virtual container VC-5. This takes place by arranging each VC-3 together with pointers in a TU-3, which is then placed in a TUG-3. Three of these may be multiplexed together in a TUG-4, which is then multiplexed into VC-5 or VC-6, respectively, as described before. Alternatively, however, it would also be possible to multiplex three TU-3s directly in the TUG-4, there being no difference between TU-3 and TUG-3 in practice. Furthermore, it is conceivable that 12 TUG-3s might be multiplexed directly in VC-5 without going through TUG-4.

Although a preferred embodiment of the present invention has been described and shown, the invention is not restricted to it, but may also be embodied in other ways within the subject-matter defined in the following claims. For example, in addition to said VC-5 and VC-6, also new virtual containers corresponding directly to STM-64 or STM frames of an even higher order are conceivable.

## Claims

1. A method of inserting a plurality of higher order virtual containers (VC-4, VC-3) having a common destination into a higher order Synchronous Transport Module STM frame (STM-4, STM-16, STM-64) in an Synchronous Digital Hierarchy SDH multiplexing structure, **characterized in that** the higher order virtual containers (VC-4, VC-3) are first multiplexed together into a larger virtual container (VC-5, VC-6), and that this is then inserted into the higher order STM frame (STM-4, STM-16, STM-64).

2. A method according to claim 1, **characterized in that** four type VC-4 virtual containers are multiplexed together in a larger virtual container (VC-5), and that this is then inserted into an STM-4 frame.

3. A method according to claim 2, **characterized in that** a pointer value is added to the larger virtual container (VC-5), and that the resulting unit (AU-5, AUG4) is placed in the STM-4 frame.

4. A method according to claim 1, **characterized in that** 16 type VC-4 virtual containers are multiplexed together in a larger virtual container (VC-6), and that this is then inserted into an STM-16 frame.

5. A method according to claim 4, **characterized in that** a pointer value is added to the larger virtual container (VC-6), and that the resulting unit (AU-6, AUG16) is placed in the STM-16 frame.

6. A method according to claims 2-5, **characterized in that** a pointer value is added to each of the type VC-4 virtual containers, and that the resulting units (TU-4, TUG-4) are multiplexed together in the larger virtual container (VC-5, VC-6).

7. A method according to claim 1, **characterized in that** a pointer value is added to each of a plurality of type VC-3 virtual containers, and that the resulting units (TU-3, TUG-3) are multiplexed together in the larger virtual container (VC-5, VC-6).

## Patentansprüche

1. Verfahren zur Einfügung einer Mehrzahl von virtuellen Containern höherer Ordnung (VC-4, VC-3) mit einem gemeinsamen Ziel in einen Synchrontransportmodul-STM-Rahmen höherer Ordnung (STM-4, STM-16, STM-64) in einer Synchrondigitalhierarchie-SDH-Multiplexstruktur, **dadurch gekennzeichnet, dass** die virtuellen Container höherer Ordnung (VC-4, VC-3) zuerst zusammen in einen größeren virtuellen Container (VC-5, VC-6) gemultiplext werden und dass dieser dann in den STM-Rahmen höherer Ordnung (STM-4, STM-16, STM-64) eingefügt wird.

2. Verfahren nach Anspruch 1, **dadurch gekennzeichnet, dass** vier virtuelle Container vom VC-4-Typ zusammen in einen größeren virtuellen Container (VC-5) gemultiplext werden und dass dieser dann in einen STM-4-Rahmen eingefügt wird.

3. Verfahren nach Anspruch 2, **dadurch gekennzeichnet, dass** ein Pointerwert zu dem größeren virtuellen Container (VC-5) hinzugefügt wird und dass die resultierende Einheit (AU-5, AUG4) in den STM-4-Rahmen platziert wird.

4. Verfahren nach Anspruch 1, **dadurch gekennzeichnet, dass** 16 virtuelle Container vom VC-4-Typ zusammen in einen größeren virtuellen Container (VC-6) gemultiplext werden und dass dieser dann in einen STM-16-Rahmen eingefügt wird.

5. Verfahren nach Anspruch 4, **dadurch gekennzeichnet, dass** ein Pointerwert zu dem größeren virtuellen Container (VC-6) hinzugefügt wird und dass die resultierende Einheit (AU-6, AUG16) in den STM-16-Rahmen platziert wird.

6. Verfahren nach den Ansprüchen 2-5, **dadurch gekennzeichnet, dass** ein Pointerwert zu jedem der virtuellen Container vom VC-4-Typ hinzugefügt wird und dass die resultierenden Einheiten (TU-4, TUG-4) zusammen in den größeren virtuellen Container (VC-5, VC-6) gemultiplext werden.

7. Verfahren nach Anspruch 1, **dadurch gekennzeichnet, dass** ein Pointerwert zu jedem einer Mehrzahl von virtuellen Containern vom Typ VC-3 hinzugefügt wird und dass die resultierenden Einheiten (TU-3, TUG-3) zusammen in den größeren virtuellen Container (VC-5, VC-6) gemultiplext werden.

## Revendications

1. Procédé d'insertion d'une pluralité de conteneurs virtuels d'ordre supérieur (VC-4, VC-3) comportant une destination commune dans une trame de module de transport synchrone STM d'ordre supérieur (STM-4, STM-16, STM-64) dans une structure de multiplexage de hiérarchie numérique synchrone SDH, **caractérisé en ce que** les conteneurs virtuels d'ordre supérieur (VC-4, VC-3) sont d'abord multiplexés à la fois dans un conteneur virtuel plus grand (VC-5, VC-6), et que celui-ci est ensuite inséré dans la trame STM d'ordre supérieur (STM-4, STM-16, STM-64).

2. Procédé selon la revendication 1, **caractérisé en ce que** quatre conteneurs virtuels de type VC-4 sont multiplexés à la fois dans un conteneur virtuel plus grand (VC-5), et que celui-ci est ensuite inséré dans une trame STM-4.

3. Procédé selon la revendication 2, **caractérisé en ce qu'**une valeur de pointeur est ajoutée au conteneur virtuel plus grand (VC-5), et que l'unité résultante (AU-5, AUG4) est placée dans la trame STM-4.

4. Procédé selon la revendication 1, **caractérisé en ce que** seize conteneurs virtuels de type VC-4 sont multiplexés à la fois dans un conteneur virtuel plus grand (VC-6), et que celui-ci est ensuite inséré dans une trame STM-16.

5. Procédé selon la revendication 4, **caractérisé en ce qu'**une valeur de pointeur est ajoutée au conteneur virtuel plus grand (VC-6), et que l'unité résultante (AU-6, AUG16) est placée dans la trame STM-16.

6. Procédé selon les revendications 2 à 5, **caractérisé en ce qu'**une valeur de pointeur est ajoutée à chacun des conteneurs virtuels de type VC-4, et que les unités résultantes (TU-4, TUG-4) sont multiplexées à la fois dans le conteneur virtuel plus grand (VC-5, VC-6).

7. Procédé selon la revendication 1, **caractérisé en ce qu'**une valeur de pointeur est ajoutée à chacun d'une pluralité de conteneurs virtuels de type VC-3, et que les unités résultantes (TU-3, TUG-3) sont multiplexées à la fois dans le conteneur virtuel plus grand (VC-5, VC-6).
